Europäisches Patentamt

European Patent Office

Office européen des brevets

(11) Publication number: **0 203 484 B1**

## EUROPEAN PATENT SPECIFICATION

(45) Date of publication of patent specification: **27.03.91**    (51) Int. Cl.⁵: **B60R 13/02**

(21) Application number: **86106744.5**

(22) Date of filing: **16.05.86**

(54) Vehicle roof and the method for its construction.

(30) Priority: **31.05.85 IT 6750385**

(43) Date of publication of application:
**03.12.86 Bulletin 86/49**

(45) Publication of the grant of the patent:
**27.03.91 Bulletin 91/13**

(84) Designated Contracting States:
**DE FR GB IT SE**

(56) References cited:
**EP-A- 0 123 004**
**FR-A- 2 539 692**

(73) Proprietor: **FIAT AUTO S.p.A.**
**Corso Giovanni Agnelli 200**
**I-10135 Torino(IT)**

(72) Inventor: **Fantini Muzzarelli, Marco**
**Corso Einaudi, 3**
**I-10100 Torino(IT)**

(74) Representative: **Prato, Roberto et al**
**STUDIO TORTA Società Semplice Via Viotti 9**
**I-10121 Torino(IT)**

## Description

This invention relates to a roof for a vehicle, particularly a motor vehicle, as specified in the preamble of claim 1, and for example as disclosed in the document FR-A- 2 53P 6P2 and a method for constructing said roof. Motor vehicle roofs are known to be formed from a pressed sheet metal part rigid with the body and a series of accessory and finishing elements, which are normally mounted on the assembly line directly on to the already assembled vehicle bodies, resulting in relatively high assembly cost and time, and in particular a relatively poor qualitative yield due to the objective difficulty encountered by the operators in working in often uncomfortable positions in confined spaces. An object of the invention is to provide a vehicle roof, the structure of which allows it to be easily and rapidly mounted on the body and to obtain a high quality of finish. A further object of the invention is to provide a method for constructing and assembling said roof which is of low cost and which enables the working conditions of the assembly line operators to be improved.

Said objects are attained according to the invention by a vehicle roof, characterised by comprising a preformed rigid plastics panel arranged to define the upper and lateral inner surfaces of the roof, a transverse support element provided with respective sun visors and with an internal rearview mirror, said element being rigidly fixed to the front end of said preformed panel, respective ventilation ports carried laterally by said preformed panel in proximity to respective handles rigidly fixed thereto, and a pair of concave longitudinal elements rigidly fixed to said preformed panel in correspondence with said port on that upper face of said panel opposite that carrying said support element, said concave elements being arranged to define with said panel respective air feed ducts for said ports. The invention also relates to a method for constructing a vehicle roof, characterised by comprising the following stages:
- assembling the vehicle on the assembly line complete with a pressed sheet metal element defining the load-bearing structure of said roof;
- constructing a preformed self-supporting rigid plastics panel arranged to define the inner finishing element of said roof;
- constructing a rigid support element and fixing a rearview mirror and sun visors thereon and mounting said support element in a transverse position on the front end of said preformed panel so as to obtain further stiffening thereof;
- mounting a pair of concave longitudinal elements on that upper face of said preformed panel opposite that face thereof carrying said support element, in order to define with said upper face aeration ducts for feeding respective ports formed laterally on said panel during the forming of this latter; and
- mounting said preformed panel on said body against said pressed sheet metal element on the assembly line. The invention will be more apparent from the non-limiting description of one embodiment thereof given herinafter with reference to the accompanying drawings in which:

Figure 1 is an exploded perspective view of the preformed self-supporting rigid plastic material parcel according to the invention; and

Figure 2 illustrated a stage in the method according to the invention.

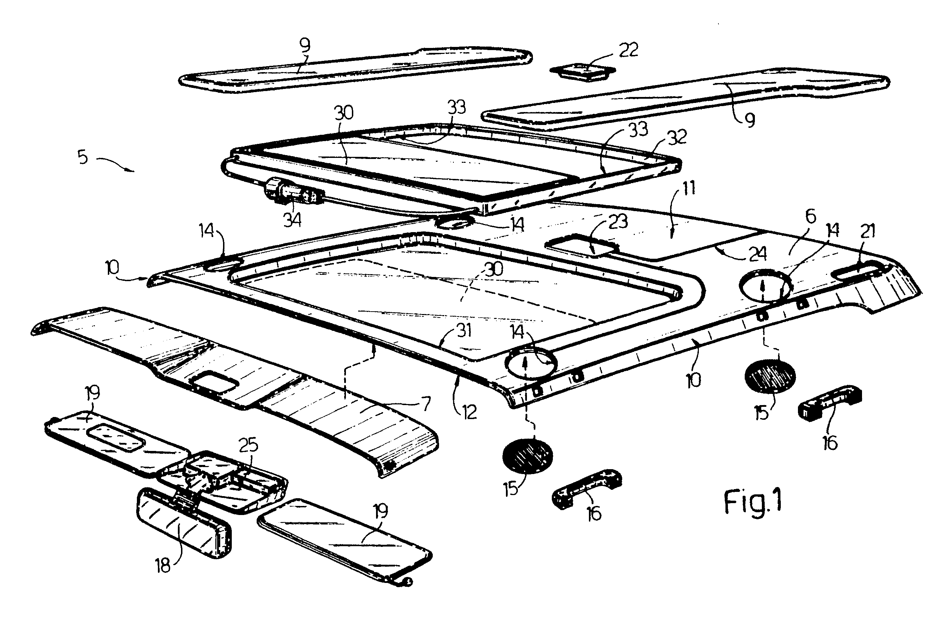

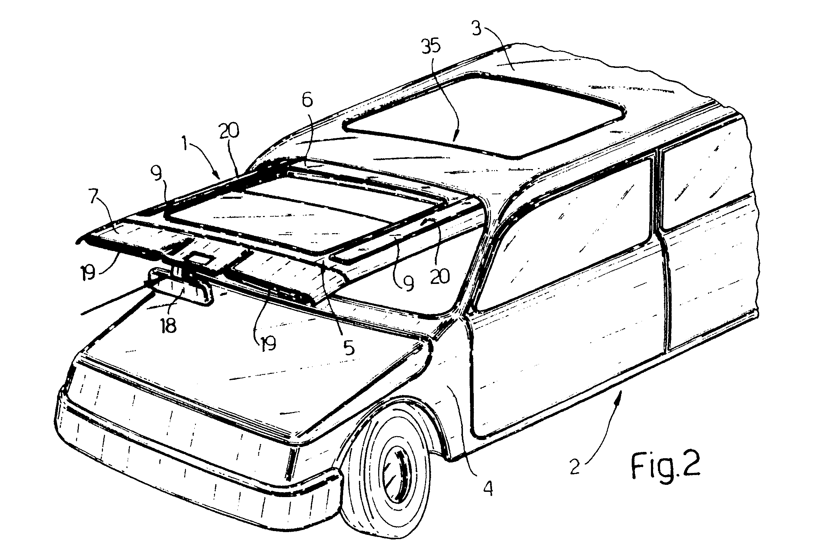

In Figures 1 and 2, the reference numeral 1 indicates overall a roof for a vehicle 2 of any known type, for example a motor vehicle, comprising a pressed sheet metal element 3 of known type forming an integral part of the vehicle body 4 and defining the load-bearing structure of the roof 1, and a self-supporting rigid subunit 5 arranged for construction and assembly off the assembly line, and to be mounted rigid with the pressed sheet metal element 3 to form the roof by a single operation which is easily and rapidly carried out. The subunit 5 comprises a preformed rigid plastics panel 6 arranged to define the upper and lateral inner surfaces of the roof 1 when the vehicle 2 has been assembled, said panel thus also defining the finishing element for the roof 1, a rigid support element 7, preferably also preformed of plastics material, in the shape of a cross-member to be fixed transversely on to the panel 6 in correspondence with the front end thereof, and a pair of rigid concave elements 9, also preformed of plastics material, to be disposed longitudinally on the panel 6 along sides 10 thereof and against the upper face 11 thereof. The transverse element 7 is rigidly fixed to the panel 6 in any convenient manner, for example by adhesive and/or by screws, or snap-fitted, against that lower face 12 thereof opposite the face 11, and is positioned substantially perpendicular to the elements 9 to define therewith, perimetrally to the panel 6, a stiffening structure for the panel 6 itself. This latter is provided along its sides 10 with respective holes 14 for housing ventilation ports 15 of known type, and with respective handles 16 fixed rigidly to the panel 6 in proximity to the holes 14. According to the invention, said handles 16 are rigid and are arranged to ensure rigidity of the panel 6 in correspondence with the holes 14. According to the invention, the element 7 lowerly carries an internal rearview mirror 18 and respective sun visors 19, both of known type, and the concave elements 9 define with the face 11 respective feed ducts 20 for the ports 15, and connectable to the ventilation system of the vehicle 2 for example by slots 21 provided through the panel 6. This latter also carries one or more light fittings 32 inserted into respective holes 23, and the face 11 is arranged to carry cables 24 of known type for the various electrical members of the vehicle 2. Preferably the mirror 18 also carries a seat for the digital clock and other accessories. Finally, according to a preferred embodiment, the roof 1 is also provided with an openable roof panel 30 of known type, which is carried rigidly by the panel 6 by virtue of a rectangular aperture 31 formed in a position adjacent to the element 7 and upperly carrying a projecting rigid frame 32, the openable roof panel 30 being mobile between longitudinal guides 33 of this latter under the control of an operating actuator 34 preferably carried by the frame 32. The pressed sheet metal element 3 is similarly provided with a corresponding aperture 35 to be closed by the openable roof panel 30 and provided in corrrespondence with the aperture 31.

According to the invention, the described roof 1 is constructed in the following manner. Firstly the body 4 is assembled on the assembly line in the conventional manner complete with the pressed sheet metal element 3, possibly comprising the aperture 35. Simultaneously the preformed elements 6, 7 and 9 are formed separately of plastics material in known manner, taking care to construct the panel 6 in such a manner that its surface finish is such that it also defines the internal finishing element for the roof 1. The mirror 18 and sun visors 19 are then mounted on the element 7, the element thus obtained being then mounted transversely on the end 12 in order to stiffen this latter. Finally, the ports 15, the light fitting 22 and all other accessories and similar elements plus the cables 24 are mounted on the panel 6 in the respective seats defined by the holes 14 and 23 and by possible cavities formed in the panel 6, and the handles 16 are also mounted, operating off the assembly line. Again operating off the assembly line, the concave elements 9 are mounted on the face 11 to form the ducts 20, and, if provided, the openable roof panel 30 is mounted by inserting and fixing the frame 32 into the aperture 31, to thus obtain the subunit 5, which can be tested off the assembly line as it is already complete with all the elements of the roof 1, including the cables, and is finally mounted on the assembly line rapidly by a single operation, for example by sliding it from the front under the pressed sheet metal element 3 through the windscreen aperture, which is still without its glass, and then fixing it to the pressed sheet metal element 3 and to the rest of the body 4 by adhesive and/or by screws or blocks.

The advantages of the method according to the invention in terms of economy and greater accuracy and ease of assembly are apparent from the aforegoing description. By virtue of the particular roof structure it is also apparent that the method of the invention results in considerable operational flexibility, to enable the panel 6 to be fitted out in numerous other ways without additional expense, by simply grouping the various components in a different manner thereon, it being sufficiently rigid to act as a load-bearing element and a reinforcement for the pressed sheet metal element 3. It has been surprisingly found that this high rigidity of the subunit 5 is obtainable exclusively by virtue of the particular structure defined by the panel 6 and by the elements 7 and 9 rigidly fixed thereto, this structure therefore being critical for the purposes of attaining the objects of the invention. In this respect, it is exclusively this structure which enables the aperture for the openable roof panel to be provided without any fear of prejudicing the rigidity of the panel 6, so enabling it to be fitted out in various ways while using the same elements, and to form a particularly light roof. The technical advantages in terms of economy of scale connected with the invention are obvious.

**Claims**

1. A vehicle-roof (1), comprising a preformed rigid plastics panel (6) arranged to define the upper and lateral inner surfaces of the roof (1), and characterized by a transverse support element (7) provided with respective sun visors (19) and with an internal rearview mirror (18), said element (7) being rigidly fixed to the front end (8) of said preformed panel (6).

2. A roof for a vehicle (1) as claimed in claim 1, characterised by further comprising respective ventilation ports (15) carried laterally by said preformed panel (6) in proximity to respective handles (16) rigidly fixed thereto, and a pair of concave longitudinal elements (9) rigidly fixed to said preformed panel (6) in correspondence with said ports (15) on that upper face (11) of said panel (6) opposite that carrying said support element (7), said concave elements (9) being arranged to define with said panel (6) respective air feed ducts (20) for said ports (15).

3. A roof (1) as claimed in claim 1 or 2, characterised in that said preformed panel (6) is provided with a hole (23) into which a light fitting (22) is inserted, said panel (6) being arranged to carry respective electric cables (24) on said upper face (11).

4. A roof (1) as claimed in claim 1, 2 or 3, characterised by further comprising a rigid frame (32) provided with respective longitudinal guides (33) in which an openable roof panel (30) for the vehicle is mobile, said frame (32) carrying an operating actuator (34) for said openable roof panel (30) and being housed upperly in a projecting manner on said preformed panel (6) through a rectangular aperture (31) formed in this latter in a position adjacent to said support element (7).

5. A method for constructing a vehicle roof (1), characterised by comprising the following stages:
    - assembling the vehicle on the assembly line complete with a pressed sheet metal element (3) defining the load-bearing structure of said roof (1);
    - constructing a preformed self-supporting rigid plastics panel (6) arranged to also define the inner finishing element of said roof (1);
    - constructing a rigid support element (7) and fixing a rearview mirror (18) and sun visors (19) thereon and mounting said support element (7) in a transverse position on the front end (8) of said preformed panel (6) so as to obtain further stiffening thereof; and
    - mounting said preformed panel (6) on said body against said pressed sheet metal element (3) on the assembly line.

6. A method as claimed in claim 5, characterised by further comprising a stage in which a pair of concave longitudinal elements (9) are mounted on that upper face (11) of said preformed panel (6) opposite that face thereof carrying said support element (7), in order to define with said upper face (11) aeration ducts for feeding respective ports (15) formed laterally on said panel (6) during the forming of this latter.

7. A method as claimed in claim 5, characterised in that during the forming of said panel (6) at least one rectangular aperture 31 is formed therein, and in that a rigid frame (32) slidably carrying an openable roof panel (30) for said vehicle is subsequently mounted through said aperture (31), said aperture (31) being provided in a position adjacent to that occupied by said support element (7) and by said concave elements (9), which are disposed perpendicular to this latter.

8. A method as claimed in claim 5 or 6, characterised by comprising a stage in which all the accessories of the roof (1), such as cables (24), handles (16), light fittings (22) and the like are mounted on said preformed self-supporting panel (6) off the assembly line.

**Revendications**

1. Toit de véhicule (1) comprenant un panneau en matière plastique rigide préformé (6) conçu pour constituer les surfaces supérieure et intérieures latérales du toit (1), caractérisé par un élément support transversal (7) équipé de pare-soleil respectifs (19) et d'un rétroviseur intérieur (18), cet élément (7) étant solidarisé de l'extrémité avant (8) du panneau préformé (6).

2. Toit de véhicule (1) selon la revendication 1, caractérisé en ce qu'il comporte en outre des orifices de ventilation respectifs (15) portés latéralement par le panneau préformé (6) à proximité de poignées respectives (16) solidarisées du panneau, et deux éléments longitudinaux concaves (9) solidarisés du panneau préformé (6) en correspondance avec les orifices (15) sur la face supérieure (11) du panneau (6) opposée à la face portant l'élément support (7), ces éléments concaves (9) étant agencés pour constituer avec le panneau (6) des conduits d'alimentation en air respectifs (20) pour les orifices (15).

3. Toit (1) selon la revendication 1 ou la revendication 2, caractérisé en ce que le panneau préformé (6) comporte un trou (23) dans lequel on introduit une applique lumineuse (22), ce panneau (6) étant agencé pour porter des câbles électriques respectifs (24) sur sa face supérieure (11).

4. Toit (1) selon l'une des revendications 1, 2 ou 3, caractérisé en ce qu'il comprend en outre un cadre rigide (32) comportant des guides longitudinaux respectifs (33) dans lesquels peut se déplacer un panneau de toit ouvrant (30) pour le véhicule, ce cadre (32) portant un vérin d'actionnement (34) pour le panneau de toit ouvrant (30) et étant logé, en dépassant vers le haut, sur le panneau préformé (6), à travers une ouverture rectangulaire (31) formée dans ce dernier, dans une position adjacente à l'élément support (7).

5. Procédé pour construire un toit de véhicule (1), caractérisé en ce qu'il comporte des stades suivants :
   - assembler le véhicule sur la chaîne de montage, complet avec un élément entôle métallique embouti (3) constituant la structure portante du toit (1) ;
   - construire un panneau en matière plastique rigide autoporteur préformé (6) conçu pour constituer également l'élément de finition intérieure du toit (1) ;
   - construire un élément support rigide (7) et fixer sur lui un rétroviseur (18) et des pare-soleil (19) et monter cet élément support (7) dans une position transversale sur l'extrémité avant (8) du panneau préformé (6) de façon à renforcer cette dernière ; et
   - monter sur la chaîne de montage ce panneau préformé (6) sur la carrosserie contre l'élément en tôle métallique embouti (3).

6. Procédé selon la revendication 5, caractérisé en ce qu'il comporte en outre un stade dans lequel on monte deux éléments longitudinaux concaves (9) sur la face supérieure (11) du panneau préformé (6) opposée à la face de celui-ci portant l'élément support (7), de façon à constituer avec la face supérieure (11) des conduits d'aération pour alimenter les orifices respectifs (15) formés latéralement sur le panneau (6) lors de la formation de celui-ci.

7. Procédé selon la revendication 5, caractérisé en ce que, pendant la formation du panneau (6), on y forme au moins une ouverture rectangulaire (31) et en ce qu'un cadre rigide (32), portant à coulissement un panneau de toit ouvrant (30) pour le véhicule, est ensuite monté à travers cette ouverture (31), celle-ci étant ménagée dans une position adjacente à celle occupée par l'élément support (7) et par les éléments concaves (9) qui sont disposés perpendiculairement à l'élément support.

8. Procédé selon la revendication 5 ou la revendication 6, caractérisé en ce qu'il comporte un stade dans lequel tous les accessoires du toit (1), par exemple câbles (24), poignées (16), appliques lumineuses (22), etc, sont montés sur le panneau auto-porteur préformé (6) hors de la chaîne de montage.

## Ansprüche

1. Fahrzeugdach (1), welches eine vorgeformte starre Kunststoffplatte (6) umfaßt, die so angeordnet ist, daß sie die oberen und seitlichen Innenflächen des Daches (1) begrenzt, und welches durch ein Querhalteelement (7) gekennzeichnet ist, das mit jeweiligen Sonnenblenden (19) und mit einem inneren Rückspiegel (18) versehen ist, welches Element (7) starr am vorderen Ende (8) der vorgeformten Platte (6) befestigt ist.

2. Dach für ein Fahrzeug (1) nach Anspruch 1, dadurch gekennzeichnet, daß es weiterhin jeweilige Belüftungsanschlüsse (15), die seitlich von der vorgeformten Platte (6) in der Nähe jeweiliger Handgriffe (16) gehalten sind, die starr daran befestigt sind, und zwei konkave Längselemente (9) umfaßt, die starr an der vorgeformten Platte (6) den Anschlüssen (15) entsprechend auf derjenigen oberen Außenfläche (11) der Platte (6) befestigt sind, die derjenigen gegenüberliegt, die das Haltelement (7) trägt, wobei die konkaven Elemente (9) so angeordnet sind, daß sie mit der Platte (6) jeweilige Luftzuführungskanäle (20) für die Anschlüsse (15) begrenzen.

3. Dach (1) nach Anspruch 1 oder 2, dadurch gekennzeichnet, daß die vorgeformte Platte (6) mit einem Loch (23) versehen ist, in das eine Lampenfassung (22) eingesetzt ist, wobei die Platte (6) so ausgebildet ist, daß sie jeweilige elektrische Kabel (24) an der oberen Außenfläche (11) trägt.

4. Dach (1) nach Anspruch 1, 2 oder 3, dadurch gekennzeichnet, daß es weiterhin einen starren Rahmen (32) umfaßt, der mit jeweiligen Längsführungen (33) versehen ist, in denen die öffenbare Dachplatte (30) für das Fahrzeug bewegbar ist, welcher Rahmen (32) ein Betätigungsglied (34) für die öffenbare Dachplatte (30) trägt und oben in vorstehender Weise an der vorgeformten Platte (6) über eine rechtwinklige Öffnung (31) aufgenommen ist, die in letzterer an einer Stelle neben dem Halteelement (7) ausgebildet ist.

5. Verfahren zum Aufbauen eines Fahrzeugdaches (1), welches dadurch gekennzeichnet ist, daß es die folgenden Schritte umfaßt:
   - Zusammenbauen des Fahrzeuges auf der Montagestraße vollständig mit einem gepreßten Metallblechelement (3), das die tragende Konstruktion des Daches (1) bildet,

- Ausbilden einer vorgeformten selbsttragenden starren Kunststoffplatte (6), die so ausgebildet ist, daß sie das innere Endelement des Daches (1) bildet,

- Ausbilden eines starren Halteelementes (7) und Befestigen eines Rückspiegels (18) und Sonnenblenden (19) daran sowie Anbringen des Halteelementes (7) in einer Querlage am vorderen Ende (8) der vorgeformten Platte (6), um deren weitere Versteifung zu erzielen, und

- Montieren der vorgeformten Platte (6) an der Karosserie an dem gepreßten Metallblechelement (3) auf der Montagestraße.

6. Verfahren nach Anspruch 5, dadurch gekennzeichnet, daß es weiterhin einen Schritt umfaßt, in dem zwei konkave Längselemente (9) an derjenigen oberen Außenfläche (11) der vorgeformten Platte (6) angebracht werden, die der Fläche gegenüberliegt, die das Halteelement (7) trägt, um mit der oberen Außenfläche (11) Belüftungskanäle zum Versorgen jeweiliger Anschlüsse (15) zu begrenzen, die seitlich an der Platte (6) während der Bildung letzterer ausgebildet werden.

7. Verfahren nach Anspruch 5, dadurch gekennzeichnet, daß während der Bildung der Platte (6) wenigstens eine rechteckige Öffnung (31) darin ausgebildet wird und daß ein starrer Rahmen (32), der gleitend verschiebbar eine öffenbare Dachplatte (30) für das Fahrzeug trägt, anschließend durch die Öffnung (31) angebracht wird, welche Öffnung (31) in einer Lage neben derjenigen vorgesehen ist, die von dem Haltelement (7) und den konkaven Elementen (9) eingenommen wird, die rechtwinklig zu letzterem angeordnet sind.

8. Verfahren nach Anspruch 5 oder 6, dadurch gekennzeichnet, daß es einen Schritt umfaßt, in dem alle Zubehörteile des Daches (1) wie beispielsweise Kabel (24), Handgriffe (16), Lampenfassungen (22) und ähnliches an der vorgeformten selbsttragenden Platte (6) außerhalb der Montagestraße angebracht werden.

Fig.1

EP 0 203 484 B1

Fig.2

EP 0 203 484 B1